# EUROPEAN PATENT APPLICATION

(11) **EP 2 905 318 A1**
(43) Date of publication of application: **12.08.2015**
(21) Application number: 13843873.4
(22) Date of filing: 01.10.2013
(51) Int. Cl.: C09J 7/00, C09J 4/02, C09J 5/00, C09J 11/06, C09J 133/04, G02F 1/1333, G02F 1/1335

(54) **DOUBLE-SIDED PRESSURE-SENSITIVE ADHESIVE SHEET WITH REPEELING PROPERTIES AND METHOD FOR REPEELING SAME**

(30) Priority: 05.10.2012 JP 2012223012
(71) Applicant: Mitsubishi Plastics, Inc., Tokyo 100-8252 (JP)
(72) Inventor: NIIMI, Kahoru, Nagahama-shi Shiga 526-8660 (JP); INENAGA, Makoto, Nagahama-shi Shiga 526-8660 (JP); UCHIDA, Takahisa, Nagahama-shi Shiga 526-8660 (JP); YAMAMOTO, Ryota, Nagahama-shi Shiga 526-8660 (JP)
(74) Representative: Hoffmann Eitle
(86) International application number: PCT/JP2013/076686
(87) International publication number: WO 2014/054632

(57) **Abstract**

Provided is a novel double-sided pressure-sensitive adhesive sheet that can achieve both the repeelability and the reliability in the pressure sensitive adhesive surface such as the occurrence of foaming. Proposed is a repeelable double-sided pressure-sensitive adhesive sheet comprising a pressure sensitive adhesive layer containing a (meth)acrylate ester copolymer as a base polymer, in which the (meth)acrylate ester copolymer has a content of a carboxyl group-containing monomer as a copolymerization component of 2% by mass or less and the pressure sensitive adhesive layer is curable by heat or ultraviolet light and satisfies the following physical properties (1) and (2):
(1) a 180° peel force is 5.0 N/cm or more when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH, and then the double-sided pressure-sensitive adhesive sheet is peeled off from the soda lime glass at a temperature of 23°C and a peel rate of 60 mm/min; and
(2) a 180° peel force is 4.0 N/cm or less when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH and allowed to absorb moisture by storing for 15 hours in a humidified environment of a temperature of 60°C and 90% RH, and then the double-sided pressure-sensitive adhesive sheet is peeled off from the soda lime glass at a temperature of 23°C and a peel rate of 60 mm/min immediately after absorbing moisture.

## Description

### TECHNICAL FIELD

The present invention relates to a double-sided pressure-sensitive adhesive sheet with repeeling property to be peelable after being stuck and can be suitably used to bond the components of an image display device such as a personal computer, a mobile terminal (PDA), a game machine, television (TV), a car navigation system, a touch panel, and a pen tablet, and a method of repeeling the double-sided pressure-sensitive adhesive sheet.

### BACKGROUND ART

In recent years, in order to improve the visibility of the image display device, the void between an image display panel such as an LCD, a PDP or EL and the protective panel or a touch panel to be disposed on the front side (viewing side) thereof is filled with a pressure sensitive adhesive sheet or an adhesive agent so as to suppress the irregular reflection of the incident light or the light emitted from the display image at the air layer interface.

Misalignment of position may occur at the time of bonding or an operation error to involve air bubbles or foreign substances between the panels may occur in a case in which the panels are integrated by bonding with a pressure sensitive adhesive sheet, and thus the pressure sensitive adhesive sheet is required to be peeled off after being stuck in order to correct this error or to reuse some of the members (for example, image display panel) when discarding the image display device. Accordingly, there is a case in which the pressure sensitive adhesive material used for such a purpose is required to exhibit repeelability (also referred to as the "reworkability") to be peelable after being stuck.

For example, a double-sided pressure-sensitive adhesive sheet is disclosed in Patent Document 1 which characterized in that the touch panel side transparent pressure sensitive adhesive layer is formed on one surface of the transparent substrate and the display device side transparent pressure sensitive adhesive layer is formed on the other surface, and the double-sided pressure-sensitive adhesive sheet is configured so as to be repeelable from the display surface of the display device as well as from the touch panel. Specifically, a configuration is disclosed in which the double-sided pressure-sensitive adhesive sheet is repeelable from the display surface of the display device as well as from the touch panel by setting the 180° peel adhesive force of the touch panel side transparent pressure sensitive adhesive layer to be greater than that of the display device side transparent pressure sensitive adhesive layer.

A repeelable configuration is disclosed in Patent Document 2 which is exerted by setting the adhesive force with respect to the display surface of the display device of the display device side pressure sensitive adhesive layer to be smaller than the adhesive force with respect to the sticking surface of the touch panel of the touch panel side pressure sensitive adhesive layer as a double-sided pressure-sensitive adhesive sheet characterized in that the double-sided pressure-sensitive adhesive sheet is configured so as to be repeelable from at least either surface of the touch panel or the display surface of the display device and has optical isotropy.

A multilayer double-sided pressure-sensitive adhesive sheet is disclosed in Patent Document 3 which is a multilayer double-sided pressure-sensitive adhesive sheet having at least one intermediate layer other than the surface side pressure sensitive adhesive layer and the back side pressure sensitive adhesive layer and has a configuration of a modified release layer in which at least one intermediate layer can be chemically or physically modified and the intermediate layer is peelable from another layer by the modification as a novel double-sided pressure-sensitive adhesive sheet that can achieve both the repeelability and the reliability in the pressure sensitive adhesive surface such as the occurrence of peeling or foaming.

### CITATION LIST

### PATENT DOCUMENT

Patent Document 1: JP 2003-238915 A
Patent Document 2: JP 2004-231723 A
Patent Document 3: JP 2011-102369 A

### SUMMARY OF THE INVENTION

### PROBLEM TO BE SOLVED BY THE INVENTION

The double-sided pressure-sensitive adhesive sheet, which has been conventionally disclosed and has a repeelability, has a problem that the possibility that foaming or the like occurs at the interface of the sticking surface is high since the peel force of at least one pressure sensitive adhesive surface is reduced in order to impart repeelability.

Accordingly, the invention is intended to provide a novel repeelable double-sided pressure-sensitive adhesive sheet which is a double-sided pressure-sensitive adhesive sheet having repeelability, and moreover, antifoaming reliability not to cause foaming at the sticking interface.

### MEANS FOR SOLVING PROBLEM

The inventors have thought that the double-sided pressure-sensitive adhesive sheet is required to have sufficient adhesive force at the time of bonding to an adherend and to have properties exhibiting decreased adhesive force when repeeling from the adherend is required in order to be repeelable while exhibiting antifoaming property. Hence, intensive investigations have been conducted on the basis of this approach, and as a result,
it has been found that a transparent double-sided pressure-sensitive adhesive sheet having both antifoaming property and repeelability after member bonding is obtained without impairing the productivity and workability by the use of a pressure sensitive adhesive of which the adhesive force is controlled by humidification or moisture absorption while sufficient adhesive force to an adherend is maintained at a normal state, thereby completing the invention.

In other words, the invention is intended to propose a repeelable double-sided pressure-sensitive adhesive sheet including a pressure sensitive adhesive layer containing a (meth)acrylate ester copolymer as a base polymer, and the repeelable double-sided pressure-sensitive adhesive sheet is firstly characterized in that the (meth)acrylate ester copolymer has a content of a carboxyl group-containing monomer as a copolymerization component of 2% by mass or less and secondly characterized in that the pressure sensitive adhesive layer is curable by heat or ultraviolet light and satisfies the following physical properties (1) and (2).

(1) A 180° peel force is 5.0 N/cm or more when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH, and then the double-sided pressure-sensitive adhesive sheet is peeled off from the soda lime glass at a temperature of 23°C and a peel rate of 60 mm/min. (2) A 180° peel force is 4.0 N/cm or less when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH and allowed to absorb moisture by storing for 15 hours in a humidified environment of a temperature of 60°C and 90% RH, and then the double-sided pressure-sensitive adhesive sheet is peeled off from the soda lime glass at a temperature of 23°C and a peel rate of 60 mm/min immediately after absorbing moisture.

### EFFECT OF THE INVENTION

The double-sided pressure-sensitive adhesive sheet proposed by the invention can have both antifoaming property and repeelability after member bonding since it is possible to have sufficient adhesive force at the time of bonding to an adherend and to decrease the adhesive force by humidification or moisture absorption when repeeling from the adherend is required as the pressure sensitive adhesive layer is curable by heat or ultraviolet light and the following physical properties (1) and (2) are satisfied.

Moreover, the pressure sensitive adhesive layer of the double-sided pressure-sensitive adhesive sheet proposed by the invention has room to be cured by heat or ultraviolet light, and thus the double-sided pressure-sensitive adhesive sheet can be used by curing the pressure sensitive adhesive layer by heat or ultraviolet light after being bonded to an adherend and excellent antifoaming properties can be exerted by the curing after bonding. In other words, the cohesive force of the pressure sensitive adhesive sheet increases by the secondary curing after bonding and thus the anchoring effect on the adhesion interface can also be obtained. Hence, it is possible to bond two adherends more firmly and to exert excellent antifoaming properties.

At this time, the pressure sensitive adhesive layer can exert repeelability when the content of the carboxyl group-containing monomer as a copolymerization component is set to 2% by mass or less in the (meth)acrylate ester copolymer which is the base polymer of the pressure sensitive adhesive layer. In other words, the base polymer itself is hydrophobic when the amount of the high polar and high hydrophilic monomer component such as acrylic acid is decreased or it is not contained, and thus the action to release supersaturated water vapor absorbed in a humidified environment and it is possible to concentrate the moisture at the adhesion interface, whereby it is possible to temporarily suppress the adhesive force by allowing moisture to be absorbed in a humidified environment.

### MODE(S) FOR CARRYING OUT THE INVENTION

Hereinafter, embodiments of the invention will be described. However, the scope of the invention is not limited to these embodiments.

### <Repeelable double-sided pressure-sensitive adhesive sheet>

The double-sided pressure-sensitive adhesive sheet according to the present embodiment (hereinafter, referred to as the "present pressure sensitive adhesive sheet") is a double-sided pressure-sensitive adhesive sheet with repeelability and is a double-sided pressure-sensitive adhesive sheet with a pressure sensitive adhesive layer A in a B-stage state curable by heat or ultraviolet light.

Here, the B-stage state means a half cured state of the resin exhibiting adhesiveness or tackiness and means a state in which it is possible to maintain a film shape or a sheet shape in the state, to further cure (crosslink) the resin by heating or irradiating with light, and to be in a highly adhesive state.

### <Pressure sensitive adhesive layer A>

The pressure sensitive adhesive layer A is a pressure sensitive adhesive layer in the B-stage state formed by curing (crosslinking) a pressure sensitive adhesive composition containing a (meth)acrylate ester copolymer as the base polymer, preferably further containing a (meth)acrylate ester monomer, and further containing a curable or crosslinkable material, a crosslinking initiator, a reaction catalyst and the like if necessary.

The base polymer means the main resin component among the resin components constituting the pressure sensitive adhesive layer A. The content proportion of the base polymer is not specified but generally occupies 50% by mass or more, particularly 70% by mass or more, and among them, 90% by mass or more (including 100%) of the resin components constituting the pressure sensitive adhesive layer A. In addition, the content proportion of each base polymer generally occupies 25% by mass or more, particularly 35% by mass or more, and among them, 45% by mass or more (including 50% by mass), in the case of containing two kinds of base polymers.

### (Base polymer)

The (meth)acrylate ester copolymer as the base polymer of the pressure sensitive adhesive layer A preferably contains one kind of the alkyl acrylate or alkyl methacrylate having any one of n-octyl, isooctyl, 2-ethylhexyl, n-butyl, isobutyl, methyl, ethyl, and isopropyl as the alkyl group or two or more kinds selected from these as the (meth) acrylate, namely, an alkyl acrylate or alkyl methacrylate component as the copolymerization component.

Moreover, as other components, the (meth)acrylate ester copolymer may contain an acrylate or methacrylate having an organic functional group such as a carboxyl group, a hydroxyl group, and a glycidyl group as a copolymerization component.

More specifically, examples of the copolymerization component of the acrylate copolymer may include 2-ethylhexyl acrylate, n-octyl acrylate, n-butyl acrylate, ethyl acrylate, methyl methacrylate, vinyl acetate, hydroxyethyl acrylate, acrylic acid, glycidyl acrylate, acrylamide, acrylonitrile, methacrylonitrile, fluorine acrylate, and silicone acrylate.

Among them, it is possible to preferably exemplify a copolymer obtained by copolymerizing a combination of one or two or more kinds of alkyl acrylates such as isooctyl acrylate, n-octyl acrylate, n-butyl acrylate, and 2-ethylhexyl acrylate, or a combination of one or two or more kinds of isooctyl acrylate, n-octyl acrylate, n-butyl acrylate, and 2-ethylhexyl acrylate and vinyl acetate.

Among them, a (meth)acrylate ester copolymer containing butyl acrylate and vinyl acetate is particularly preferable as the copolymerization component. Butyl acrylate is not only preferable as a component to impart tackiness to a polymer at room temperature but is also preferable since its Tg is relatively high and thus sagging caused by insufficient cohesive force and excessive flexibility hardly occurs even when acrylic acid or the like is removed as compared with the case of using a flexible monomer other than butyl acrylate. In addition, vinyl acetate is a monomer component of which the homopolymer has a Tg determined by the differential scanning calorimetry (DSC) method of 20°C or higher and thus is preferable in terms that the effect of increasing the apparent cohesive force in a normal temperature region is exhibited.

As the polymerization method using these monomers, it is possible to employ a known polymerization method such as a solution polymerization, an emulsion polymerization, a bulk polymerization, and a suspension polymerization, and it is possible to obtain the acrylate copolymer by the use of a polymerization initiator such as a thermal polymerization initiator or a photopolymerization initiator depending on the polymerization method.

However, it is important for the (meth)acrylate ester copolymer which is the base polymer of the pressure sensitive adhesive layer A to set the content of the carboxyl group-containing monomer as a copolymerization component to 2% by mass or less.

The pressure sensitive adhesive layer can absorb moisture in the humidified environment and thus can exert repeelability when the content of the carboxyl group-containing monomer as a copolymerization component is set to 2% by mass or less. In other words, the polymer itself is hydrophobic when the amount of the high polar and high hydrophilic monomer component such as acrylic acid is decreased or it is not contained, and thus the action to release supersaturated water vapor absorbed in a humidified environment easily works and the moisture is concentrated at the adhesion interface, whereby it is possible to temporarily suppress the adhesive force.

From this point of view, it is important to set the content of the carboxyl group-containing monomer as a copolymer component to 2% by mass or less, that is, 0% by mass or more and 2% by mass or less in the (meth)acrylate ester copolymer. Among them, it is more preferably 0.05% by mass or more or 1.5% by mass or less and even more preferably 0.1% by mass or more or 1% by mass or less.

The acrylate copolymer preferably contains a monomer component which has a glass transition temperature (Tg) defined by the tan δ peak temperature of dynamic viscoelasticity of -30°C or higher and 10°C or lower, a mass average molecular weight of 100,000 to 700,000, and a glass transition temperature (Tg) as a homopolymer determined by the differential scanning calorimetry (DSC) method of 20°C or higher as a copolymer component.

The acrylate copolymer does not contain a carboxyl group-containing monomer such as acrylic acid or contains in a small amount as described above. In general, there is a tendency that the cohesive force deteriorates and the adhesive force decreases when the use amount of such a carboxyl group-containing monomer for copolymerization is decreased. Accordingly, it is possible to increase the cohesive force and to suppress a decrease in adhesive force by adjusting the Tg and molecular weight of the acrylate copolymer and Tg of the monomer component to be in a predetermined range.

In other words, it is possible to exert suitable tackiness as a pressure sensitive adhesive sheet when the Tg defined by the tan δ peak temperature of dynamic viscoelasticity of the acrylate copolymer is in the range of from -30°C to 10°C. Hence, from this point of view, the Tg defined by the tan δ peak temperature of dynamic viscoelasticity of the acrylate copolymer is preferably from -30°C to 10°C, more preferably -28°C or higher or 5°C or lower among them, and even more preferably -25°C or higher or 0°C or lower among them.

In addition, it is possible to impart more suitable cohesive force by containing a copolymerization component which has the Tg determined by the differential scanning calorimetry (DSC) method of 20°C or higher. Hence, the Tg determined by the differential scanning calorimetry (DSC) method of at least one copolymerization component is preferably 20°C or higher, 200°C or lower among them, and even more preferably 150°C or lower among them.

Examples of the copolymerization component having the Tg determined by the differential scanning calorimetry (DSC) method of 20°C or higher may include vinyl acetate, styrene, methyl methacrylate, isobornyl (meth)acrylate, dicyclopentadienyl (meth)acrylate, ethoxylated 4-cumyl phenol (meth)acrylate, 3,3,5-trimethyl cyclohexanol (meth)acrylate, cyclic trimethylolpropane formal (meth)acrylate, 2-hydroxypropyl methacrylate, tert-butyl (meth)acrylate, neopentyl acrylate, cetyl acrylate, phenyl acrylate, toluyl acrylate, 2-phenoxyethyl methacrylate, diethylene glycol methyl ether methacrylate, 2-naphthyl acrylate, 2-methoxycarbonyl phenyl acrylate, ethyl methacrylate, n-butyl methacrylate, sec-butyl methacrylate, isobutyl methacrylate, propyl methacrylate, isopropyl methacrylate, stearyl methacrylate, tetrahydrofurfuryl methacrylate, ethoxylated nonyl phenol methacrylate, cyclohexyl methacrylate, 4-tert-butyl cyclohexyl methacrylate, benzyl methacrylate, phenethyl methacrylate, glycidyl methacrylate, hydroxyethyl methacrylate, acrylamide, hydroxyethyl acrylamide, N,N-dimethylacrylamide, N,N-dimethylaminoethyl acrylamide, and acrylonitrile.

Meanwhile, it is possible to appropriately adjust the glass transition temperature (Tg) defined by the tan δ peak temperature of dynamic viscoelasticity of the acrylate copolymer by the kind and composition ratio of the acrylic monomer or methacrylic monomer used to polymerize this, and further the polymerization conditions.

It is possible to measure the glass transition temperature (Tg) defined by the tan δ peak temperature of dynamic viscoelasticity using a viscoelasticity measuring apparatus, for example, the viscoelasticity measuring apparatus "Dynamic Analyzer RDAII" manufactured by Rheometric Scientific., Inc. At that time, the temperature representing the maximum value of tan δ when measured at a strain of 0.5% and a frequency of 1 Hz using a 25 mm φ parallel plate may be read as the Tg.

On the other hand, the temperature of a sample is raised using a differential scanning calorimeter (for example, Pyris 1 DSC manufactured by PerkinElmer Co., Ltd.) at a temperature rising rate of 10°C/min in a nitrogen atmosphere, and the temperature at which the baseline of the DSC curve thus obtained and the tangent at the inflection point intersect each other may be read as the Tg determined by the differential scanning calorimetry (DSC) method.

It is possible to eliminate the viscous fracture or insufficient tackiness at the time of peeling and to suppress a decrease in adhesive force when the mass average molecular weight of the acrylate copolymer is from 100,000 to 700,000.

Hence, the mass average molecular weight of the acrylate copolymer is preferably from 100,000 to 700,000 from this point of view.

### ((Meth)acrylate monomer)

The (meth)acrylate ester monomer is preferably a (meth)acrylate ester monomer having a hydroxyl group and/or alkylene oxide group structure.

The pressure sensitive adhesive sheet can exerts excellent repeelability by containing a (meth)acrylate ester monomer having a hydroxyl group and/or alkylene oxide group structure. In other words, the (meth)acrylate ester monomer having a hydroxyl group and/or alkylene oxide group structure is a hydrophilic monomer, and thus the (meth)acrylate ester monomer is likely to be oriented on the surface in the composition with the base polymer which is a hydrophobic polymer and the hydrophilic group takes a inclined structure on the adhesion surface side. As a result, the moisture which has been excessively absorbed in a humidified environment is more easily concentrated at the adhesion interface and more excellent repeelability can be exhibited. In addition, moisture permeability is imparted to the entire composition by the addition of the hydrophilic monomer, and thus it is possible to further enhance the effect of suppressing hygrothermal whitening.

Here, examples of the (meth)acrylate ester monomer having a hydroxyl group and/or alkylene oxide group structure may include polyethylene glycol (meth)acrylate, polypropylene glycol (meth)acrylate, diethylene glycol monobutyl ether (meth)acrylate, 2-(2-ethoxyethoxy) ethyl (meth)acrylate, ethoxylated nonylphenol (meth)acrylate, methoxy polyethylene glycol mono(meth)acrylate, ethoxylated phenol (meth)acrylate, 2-hydroxyethyl (meth)acrylate, 4-hydroxybutyl (meth)acrylate, 2-hydroxybutyl (meth)acrylate, 6-hydroxyhexyl (meth)acrylate, 2-hydroxypropyl (meth)acrylate, caprolactone-modified (meth)acrylate, 2-hydroxy-3-phenoxypropyl acrylate, hydroxyethyl acrylamide, and methylol acrylamide.

The (meth)acrylate ester monomer may be contained in an amount as little as merely enough to be present on the surface (interface) when the hydrophilic group takes a inclined structure on the adhesion surface side, but the adhesive properties decreases by the influence of monomer when the amount of the (meth)acrylate ester monomer is excessive.

From this point of view, the content of (meth)acrylate ester monomer in the pressure sensitive adhesive layer A is preferably from 0.05 to 30.0 parts by mass, even more preferably 0.1 parts by mass or more or 20.0 parts by mass or less among them, and particularly preferably 1.0 parts by mass or more or 10.0 parts by mass or less among them with respect to 100 parts by mass of the (meth)acrylate ester copolymer.

### (Curing or crosslinking material)

In the pressure sensitive adhesive layer A, one or more of an epoxy resin, an acrylic resin, a polydimethyl siloxane resin, or another organic functional polysiloxane resin which can be crosslinked by a free radical polymerization, an atom transfer radical polymerization, a ring opening polymerization, a ring opening metathesis polymerization, an anionic polymerization, or a cationic polymerization may be formulated as a curing or crosslinking material if necessary.

It is preferable to formulate a heat curing agent such as an organic peroxide, an isocyanate compound, an epoxy compound, or an amine compound in order to perform heat curing.

On the other hand, it is preferable to formulate a cleavage type photoinitiator and a hydrogen abstraction type photoinitiator as the photoinitiator in order to perform photocuring. At this time, either one may be used or both of them may be used concurrently.

Examples of the cleavage type photoinitiator may include benzoin butyl ether, benzyl dimethyl ketal, and 2-hydroxyacetophenone.

On the other hand, examples of the hydrogen abstraction type photoinitiator may include benzophenone, Michler's ketone, 2-ethyl anthraquinone, thioxanthone and a derivative thereof. However, the photoinitiator is not limited to the substances mentioned above.

It is possible to exemplify a method in which the heat curing agent and the photoinitiator are concurrently used to primarily crosslink the pressure sensitive adhesive layer to the base polymer by heat curing and to leave the pressure sensitive adhesive layer to be photocured, thereby obtaining the B-stage state in order to put the pressure sensitive adhesive layer in the B-stage state.

In addition, it is also possible to obtain the B-stage state by primarily crosslinking the pressure sensitive adhesive composition using a photopolymerization initiator which is a component constituting the pressure sensitive adhesive layer by ultraviolet light so as to leave reactivity to ultraviolet light. At this time, the initiators which have been excited by UV irradiation at the time of primary crosslinking but have not contributed to the crosslinking reaction return to the ground state and are utilized as the initiator again when using the intermolecular hydrogen abstraction type photopolymerization initiator. Therefore it is easy to leave the intermolecular hydrogen abstraction type photopolymerization initiator in the reaction system as the active species even after the primary curing of the composition by ultraviolet light as compared with the intramolecular cleavage type photopolymerization initiator and it can be used as a reaction initiator at the time of further crosslinking (secondary curing). Accordingly, it is preferable to use a hydrogen abstraction type photopolymerization initiator.

It is preferable to adjust the mixing amount of the photopolymerization initiator to be a proportion of from 0.1 to 10 parts by mass, particularly 0.5 parts by mass or more or 5 parts by mass or less, and 0.8 parts by mass or more or 3 parts by mass or less among them with respect to 100 parts by mass of the (meth)acrylate ester copolymer in consideration of the polymerization reactivity or the adhesive properties and transparency of the resulting pressure sensitive adhesive layer.

Hence, it is possible to mention a configuration example in which the (meth)acrylate ester monomer of from 0.05 to 30.0 parts by mass and the intermolecular hydrogen abstraction type photoinitiator of from 0.1 to 10 parts by mass are contained respectively with respect to 100 parts by mass of the (meth)acrylate ester copolymer as a suitable example of the pressure sensitive adhesive layer.

### (Other components)

The pressure sensitive adhesive layer A may contain various additives such as a coloring matter such as a pigment or dye having near-infrared absorption property, a tackifier, an antioxidant, an anti-aging agent, a moisture absorbent, an ultraviolet absorber, a silane coupling agent, a natural or synthetic resin, and a glass fiber or glass beads if necessary in addition to the above components.

### (Physical properties of pressure sensitive adhesive layer A)

It is important for the pressure sensitive adhesive layer A to satisfy the following physical properties (1) and (2).
(1) It is important that the 180° peel force is 5.0 N/cm or more when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and relative humidity of 40% RH, and then the double-sided pressure-sensitive adhesive sheet is peeled off from the soda lime glass at a temperature of 23°C and a peel rate of 60 mm/min.

To equip the physical property (1) indicates that the pressure sensitive adhesive layer A can maintain sufficient adhesive force to an adherend in a normal state.
(2) It is important that the 180° peel force is 4.0 N/cm or less when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH and then allowed to absorb moisture by storing for 15 hours in a humidified environment of a temperature of 60°C and 90% RH, and then the double-sided pressure-sensitive adhesive sheet is peeled off from the soda lime glass at a temperature of 23°C and a peel rate of 60 mm/min immediately after absorbing moisture, and it is preferable that the 180° peel force is 3.0 N/cm or less among them and 2.0 N/cm or less among them.

To equip the physical property (2) indicates that the pressure sensitive adhesive layer A is easily peeled off since the adhesive force thereof is decreased by humidification and moisture absorption.

The present pressure sensitive adhesive sheet can exhibit sufficient adhesive force at the time of bonding to an adherend and can be repeeled from the adherend if required by decreasing the adhesive force thereof by humidification and moisture absorption if the present pressure sensitive adhesive sheet has the pressure sensitive adhesive layer A satisfying the above physical properties (1) and (2). Hence, the present pressure sensitive adhesive sheet can have both antifoaming property and repeelability after member bonding without impairing the productivity and workability.

### <Configuration>

The present pressure sensitive adhesive sheet may be a pressure sensitive adhesive sheet of a single layer composed of the pressure sensitive adhesive layer A or a pressure sensitive adhesive sheet of a multilayer structure having the pressure sensitive adhesive layer A and another pressure sensitive adhesive layer B.

In the case of the pressure sensitive adhesive sheet of the multilayer structure having the pressure sensitive adhesive layer A and another pressure sensitive adhesive layer B, the pressure sensitive adhesive sheet may have another layer or a mold release sheet on one side or both sides.

The pressure sensitive adhesive layer B may be any pressure sensitive adhesive layer in the B-stage state formed by curing (crosslinking) a pressure sensitive adhesive composition consisting of an arbitrary composition.

The composition and physical properties of the pressure sensitive adhesive layer B may be the same as or different from those of the pressure sensitive adhesive layer A.

### (Production method)

With regard to the present pressure sensitive adhesive sheet, it is possible to obtain the pressure sensitive adhesive layer A and further a sheet to form the pressure sensitive adhesive layer B, for example, by selecting an acrylate copolymer as a base polymer, adding a crosslinking agent and a reaction initiator or a reaction catalyst or the like and mixing by stirring, forming a film on a mold release film so as to have an intended thickness, and crosslinking by heated-air drying or ultraviolet irradiation directly or via the mold release film.

At this time, it is possible to obtain a preferred elastic modulus by adjusting the irradiation dose depending on the amount of the monomer and the photoinitiator upon irradiating with ultraviolet light.

### <Applications>

In an image display device having two facing components for image display device, it is possible to form an image display device by filling the present pressure sensitive adhesive sheet between the two components for image display device.

Examples of the component for image display device may include a laminate composed of a combination of any one or two or more kinds selected from the group consisting of a touch panel, an image display panel, a surface protective panel and a polarizing film.

Meanwhile, bubbles easily get caught into the bonding interface when generally sticking the plate-shaped members using a pressure sensitive adhesive sheet or an adhesive sheet and thus it is preferable to stick the plate-shaped members after autoclaving so as to once liquefy the remaining bubbles in the pressure sensitive adhesive sheet when bonding the plate-shaped members using the present pressure sensitive adhesive sheet.

### (Repeeling method)

In addition, at this time, it is possible to peel (referred to as repeel) off the double-sided pressure-sensitive adhesive sheet from the component for image display device by filling the present pressure sensitive adhesive sheet in the image display device having the above configuration, that is, between the two facing components for image display device, curing the double-sided pressure-sensitive adhesive sheet, for example, by heat or ultraviolet light, and then allowing the double-sided pressure-sensitive adhesive sheet to absorb moisture in a humidified environment.

As the humidified environment for repeeling the present pressure sensitive adhesive sheet, it is preferable that the temperature be from 40 to 90°C and 50°C or higher or 85°C or lower among them, and the humidity be from 70 to 100% RH and 80% RH or more or 95% RH or less among them.

In addition, the time to store the present pressure sensitive adhesive sheet in the humidified environment is preferably about from 1 to 100 hours, 2 hours or longer or 80 hours or shorter among them, and even more preferably 3 hours or longer or 50 hours or shorter among them.

### (Explanation of phrases and the like)

Generally the "sheet" refers to a thin flat product having a relatively small thickness compared to the length and width according to the definition by JIS, and generally the "film" refers to a thin flat product which has an extremely small thickness compared to the length and width and of which the maximum thickness is arbitrarily limited, and is typically provided in the form of a roll (Japanese Industrial Standards JISK6900). However, the boundary between the sheet and the film is not clear and it is not required to distinguish the two in words in the invention, and thus it is intended to include the "sheet" even when referred to as the "film" and to include the "film" even when referred to as the "sheet" in the invention.

In addition, in the case of expressing as the "panel" such as an image display panel and a protective panel, it is intended to include a plate body, a sheet and a film.

In the present specification, in a case in which "X to Y" (X and Y are arbitrary numbers) is described, it is intended to include also the meaning of "preferably greater than X" or "preferably smaller than Y" along with the meaning of "X or greater and Y or smaller" unless otherwise stated.

In addition, in a case in which "X or greater" (X is an arbitrary number) is described, it is intended to include the meaning of "preferably greater than X" unless otherwise stated, and in a case in which "Y or smaller" (Y is an arbitrary number) is described, it is intended to include the meaning of "preferably smaller than Y" unless otherwise stated.

### EXAMPLES

Next, the invention will be described more specifically with reference to Examples.

### <Example 1>

A pressure sensitive adhesive composition was prepared by adding 30 g of 4-methylbenzophenone with respect to 1 kg of the base polymer (mass average molecular weight of 400,000, and Tg determined by the tan δ peak temperature of dynamic viscoelasticity of -20°C) obtained by the random copolymerization of 70 parts by mass of butyl acrylate and 30 parts by mass of vinyl acetate.

The pressure sensitive adhesive composition was coated on a mold release PET (DIAFOIL MRA 100) using an applicator so as to have a thickness of 150 µm and then a mold release PET (DIAFOIL MRF 75) was covered thereon.

The pressure sensitive adhesive sheet 1 was fabricated by irradiating both surfaces sandwiching the mold release PET with ultraviolet light of 365 nm using a high-pressure mercury lamp so as to have the integrated light amount of 1000 mJ/cm². At this time, the integrated amount of ultraviolet light was adjusted so as to leave the reactivity to ultraviolet light.

### <Example 2>

The pressure sensitive adhesive sheet 2 was fabricated in the same manner as in Example 1 except using the base polymer (mass average molecular weight of 500,000, Tg determined by the tan δ peak temperature of dynamic viscoelasticity of -17°C) obtained by the random copolymerization of 70 parts by mass of butyl acrylate, 29 parts mass of vinyl acetate (Tg determined by the DSC method of 31°C), and 1 part by mass of acrylic acid.

### <Example 3>

The pressure sensitive adhesive sheet 3 was fabricated in the same manner as in Example 1 except using the pressure sensitive adhesive composition obtained by adding 30 g of polyethylene glycol acrylate (BLEMMER AE200 manufactured by NOF CORPORATION) and 20 g of 4-methylbenzophenone with respect to 1 kg of the base polymer used in Example 1.

### <Example 4>

The pressure sensitive adhesive sheet 3 was fabricated in the same manner as in Example 1 except using the pressure sensitive adhesive composition obtained by adding 10 g of 2-hydroxypropyl acrylate (Light Ester HOP-A (N) manufactured by KYOEISHA CHEMICAL Co., LTD.) and 20 g of 4-methylbenzophenone with respect to 1 kg of the base polymer used in Example 2.

### <Comparative Example 1>

The pressure sensitive adhesive sheet 4 was fabricated in the same manner as in Example 1 except using an acrylate copolymer (mass average molecular weight of 350,000) obtained by the random copolymerization of 70 parts by mass of 2-ethylhexyl acrylate, 16 parts by mass of vinyl acetate, and 4 parts by mass of acrylic acid as the base polymer.

### <Comparative Example 2>

The pressure sensitive adhesive composition was obtained by mixing and stirring 1 kg of an acrylate copolymer solution (solid content of 30%) as the base polymer obtained by copolymerizing 70 parts by mass of butyl acrylate, 27 parts by mass of ethyl acrylate, 2 parts by mass of acrylic acid, and 1 part by mass of ethylhexyl acrylate with 1.0 g of an epoxy resin (E-5XM manufactured by Soken Chemical Engineering Co., Ltd.) and 2.5 g of an isocyanate compound (L-45 manufactured by Soken Chemical Engineering Co., Ltd.) as the curing agent.

The pressure sensitive adhesive composition was coated and dried on a mold release PET (DIAFOIL MRA 100) so as to have a thickness of 100 µm after drying and then a mold release PET (DIAFOIL MRF 75) was covered on the surface thereof.

The laminate was stored for one week in a normal state of 23°C and 40% RH to allow the crosslinking reaction to proceed, thereby fabricating the pressure sensitive adhesive sheet 5.

### <Comparative Example 3>

Hydroxyethyl acrylate was added to the terminal of an isocyanate of a prepolymer obtained by polymerizing hexamethylene polycarbonate diol and hexamethylene diisocyanate, thereby synthesizing a urethane acrylate (base polymer) having an acryloyl group at the terminal.

The pressure sensitive adhesive composition was obtained by uniformly mixing 300 g of polyester polyol (Arakyd 7018 manufactured by Arakawa Chemical Industries, Ltd.), 400 g of a thermoplastic polyurethane resin (Pandex T5205 manufactured by DIC Bayer Polymer Ltd.), and 10 g of photopolymerization initiator (Darocure TPO manufactured by BASF) with respect to 1 kg of the urethane acrylate.

The pressure sensitive adhesive composition was coated on a mold release PET (DIAFOIL MRA 100) so as to have a thickness of 150 µm and then a mold release PET (DIAFOIL MRF 75) was covered thereon, thereby fabricating the thermoplastic adhesive sheet.

### <Comparative Example 4>

The pressure sensitive adhesive sheet 6 was fabricated in the same manner as in Comparative Example 2 except using the pressure sensitive adhesive composition obtained by mixing 0.4 g of an isocyanate curing agent (TD75 manufactured by Soken Chemical Engineering Co., Ltd.) with 1 kg of acrylate copolymer solution (solid content of 15%) as the base polymer obtained by copolymerizing 95 parts by mass of butyl acrylate and 5 parts by mass of hydroxybutyl acrylate.

### <Evaluation>

The pressure sensitive adhesive sheets obtained in Examples and Comparative Examples above were evaluated by the following methods.

### (Adhesive force)

One of the mold release PET films (DIAFOIL MRF 75) of the pressure sensitive adhesive sheet fabricated in Examples and Comparative Examples was peeled off, and then a PET film (DIAFOIL T 100, 50 µm) having a thickness of 50 µm as a backing film was bonded to the exposed pressure sensitive adhesive surface to obtain a laminate article.

The laminate article thus obtained was cut to have a length of 150 mm and a width of 10 mm, then the pressure sensitive adhesive surface exposed by peeling the remaining mold release film was superimposed on the soda lime glass (85 mm × 55 mm × 0.5 mm in thickness), and the two were roll-crimped by reciprocating a hand roller of 1 kg one time, thereby obtaining a laminate article after roll bonding. This laminate article after roll bonding was matured by allowing to stand for 24 hours in an environment of a temperature of 23°C and a relative humidity of 40% RH, thereby fabricating a sample for peel force measurement.

Meanwhile, with regard to the adhesive sheet of Comparative Example 3, laminate article after roll bonding which was fabricated in the same manner as above was heated for 10 minutes at 85°C to melt the adhesive resin and further to cure by irradiating with ultraviolet light so as to have an integrated light amount by 365 nm of 2000 mJ/cm², and then matured by allowing to stand for 24 hours in an environment of a temperature of 23°C and a relative humidity of 40% RH, thereby fabricating a sample for peel force measurement.

With regard to the sample for peel force measurement fabricated as described above, the 180° peel force (N/cm) was measured when the double-sided pressure-sensitive adhesive sheet was peeled off from the soda lime glass at a temperature of 23°C and a peel speed of 60 mm/min ("glass adhesive force before humidification" in Table 1).

In addition, the 180° peel force (N/cm) was measured when the double-sided pressure-sensitive adhesive sheet was peeled off from the soda lime glass at a temperature of 23°C and a peel speed of 60 mm/min ("glass adhesive force after humidification" in Table 1) immediately after the sample for peel force measurement fabricated as described above was allowed to absorb moisture by storing for 15 hours in a humidified environment of a temperature of 60°C and a relative humidity 90% RH.

### (Reworkability)

The pressure sensitive adhesive sheets fabricated in Examples and Comparative Examples were cut to be 80 mm × 50 mm, one of the mold release PET films (DIAFOIL MRF 75) of the pressure sensitive adhesive sheet was peeled off, the pressure sensitive adhesive surface thus exposed was superimposed on the soda lime glass (85 mm × 55 mm × 0.5 mm in thickness) and roll-crimped by reciprocating a hand roller of 1 kg one time, subsequently the remaining mold release film (DIAFOIL MRA 100) was peeled off therefrom, the same soda lime glass as above was press bonded (press pressure of 0.45 MPa) to the pressure sensitive adhesive surface thus exposed using a vacuum bonding machine under reduced pressure (absolute pressure of 5 kPa), thereby obtaining a laminate article after press bonding. This laminate article after press bonding was subjected to autoclaving (60°C, 0.3 MPa, 30 min), thereby fabricating a sample for measurement.

Meanwhile, with regard to the adhesive sheet of Comparative Example 3, the sample for measurement was fabricated after the finished stuck laminate article which was fabricated in the same manner as above was heated for 10 minutes at 85°C to melt the adhesive resin and further to cure by irradiating with ultraviolet light so as to have an integrated light amount by 365 nm of 2000 mJ/cm².

A polypropylene wedge was inserted into the adhesive interface between the soda lime glass and the pressure sensitive adhesive sheet from the peripheral portion immediately after the sample for measurement fabricated as described above was allowed to absorb moisture by storing for 24 hours in a humidified environment of a temperature of 60°C and a relative humidity of 90% RH, and the pressure sensitive adhesive sheet was slowly peeled off from the periphery. At that time, it was judged to be "○" when it was possible to separate the soda lime glass from the pressure sensitive adhesive sheet and to be "×" when it was not possible to separate the soda lime glass from the pressure sensitive adhesive sheet or the glass was broken.

### (Antifoaming reliability)

The pressure sensitive adhesive sheets fabricated in Examples and Comparative Examples were cut to be 80 mm × 50 mm, one of the mold release PET films (DIAFOIL MRF 75) of the pressure sensitive adhesive sheet was peeled off, the pressure sensitive adhesive surface thus exposed was superimposed on the soda lime glass (85 mm × 55 mm × 0.5 mm in thickness) and roll-crimped by reciprocating a hand roller of 1 kg one time, subsequently the remaining mold release film (DIAFOIL MRA 100) was peeled off therefrom, the ZEONOR film (thickness 100 µm) was stuck on the pressure sensitive adhesive surface thus exposed to laminate, thereby obtaining a laminate article after roll bonding. This laminate article after roll bonding was subjected to autoclaving (60°C, 0.3 MPa, 30 min), thereby fabricating a finished laminate article.

Meanwhile, with regard to the adhesive sheet of Comparative Example 3, the finished laminate article was fabricated after the finished stuck laminate article which was fabricated in the same manner as above was heated for 10 minutes at 85°C to melt the adhesive resin and further to cure by irradiating with ultraviolet light from the glass surface side via the glass so as to have an integrated light amount by 365 nm of 2000 mJ/cm².

The finished laminate article which was fabricated as described above was matured by allowing to stand for 24 hours in an environment of a temperature of 23°C and a relative humidity of 40% RH, thereby fabricating a laminate for evaluation.

This laminate for evaluation was subjected to a heat treatment at 85°C for 6 hours, and then the appearance thereof was observed. At that time, it was judged to be "○" when no change was observed and to be "×" when foaming or peeling was observed on the laminate.

**[Table 1]**

| Formulation | Example 1 | Example 2 | Example 3 | Example 4 | Comparative Example 1 | Comparative Example 2 | Comparative Example 3 | Comparative Example 4 |
|---|---|---|---|---|---|---|---|---|
| Carboxyl group-containing monomer in base polymer | Absence | 1% of acrylic acid | Absence | 1% of acrylic acid | 4% of acrylic acid | 2% of acrylic acid | Absence | Absence |
| Hydrophilic monomer | Absence | Absence | Polyethylene glycol acrylate | 2-Hydroxy-propyl acrylate | Absence | Absence | Absence | Absence |
| Glass adhesive force before humidification (N/cm) | 6.8 | 7.3 | 6.9 | 8.1 | 8.4 | 5.4 | 16.0 | 2.0 |
| Glass adhesive force after humidification (N/cm) | 1.0 | 2.7 | 0.2 | 0.2 | 4.0 | 6.0 | 15.4 | 0.7 |
| Reworkability | ○ | ○ | ○ | ○ | × | × | × | ○ |
| Antifoaming reliability | ○ | ○ | ○ | ○ | ○ | ○ | ○ | × |

It was possible to confirm that the adhesive force was suppressed by humidification and thus it was possible to easily separate the member in a state in which the pressure sensitive adhesive layer had absorbed moisture even after once being bonded to the adhesion member in Examples 1 to 4.

In addition, it was possible to confirm that required adhesive force and cohesive force of the pressure sensitive adhesive layer was maintained in a normal state and it was possible to maintain favorable appearance without causing peeling or foaming by the gas pressure of outgas in the environmental test.

In contrast, Comparative Example 1 contained acrylic acid of a high polar component at a high concentration and thus a high value of adhesive force was maintained even after moisture absorption, thereby exhibiting inferior reworkability. In addition, with regard to the adhesive force of Comparative Example 1, the contribution of cohesive force due to the hydrogen bonding derived from a polar component was great and the cohesive force significantly decreased due to the loss of contribution of the hydrogen bonding in a high temperature region, and thus foaming was caused by the gas pressure of outgas volatilized and generated from the member in the environmental test at a high temperature, thereby resulting in inferior reliability.

Comparative Example 2 was inferior in reworkability although the cohesive force was high since curing proceeded by heat or moisture and reliability was obtained.

Comparative Example 3 was an adhesive resin and thus a high adhesive strength was obtained but separation after curing was not easy and rework was difficult. In addition, it was a hot melt resin and thus the pretreatment for pasting was cumbersome and there was also a problem of inferior workability and productivity.

Comparative Example 4 was a slightly pressure sensitive adhesive sheet suppressed in initial adhesive force and thus separation after bonding was possible without the need for humidification and excellent reworkability was exhibited, but it was inferior in adherence and foaming reliability was not obtained.

## Claims

1. A repeelable double-sided pressure-sensitive adhesive sheet comprising a pressure sensitive adhesive layer containing a (meth)acrylate ester copolymer as a base polymer, wherein
the (meth)acrylate ester copolymer has a content of a carboxyl group-containing monomer as a copolymerization component of 2% by mass or less and
the pressure sensitive adhesive layer is curable by heat or ultraviolet light and satisfies the following physical properties (1) and (2):
(1) a 180° peel force is 5.0 N/cm or more when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH, and then the double-sided pressure-sensitive adhesive sheet is peeled off from the soda lime glass at a temperature of 23°C and a peel rate of 60 mm/min; and
(2) a 180° peel force is 4.0 N/cm or less when one surface of the double-sided pressure-sensitive adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH and allowed to absorb moisture by storing for 15 hours in a humidified environment of a temperature of 60°C and 90% RH, and then the double-sided pressure-sensitive adhesive sheet is peeled off from the soda lime glass at a temperature of 23°C and a peel rate of 60 mm/min immediately after absorbing moisture.

2. The double-sided pressure-sensitive adhesive sheet according to claim 1, wherein the pressure sensitive adhesive layer contains a (meth)acrylate ester monomer at from 0.05 to 30.0 parts by mass with respect to 100 parts by mass of the (meth)acrylate ester copolymer.

3. The double-sided pressure-sensitive adhesive sheet according to claim 1 or 2, wherein the pressure sensitive adhesive layer contains a (meth)acrylate ester monomer at from 0.05 to 30.0 parts by mass and an intermolecular hydrogen abstraction type photoinitiator at from 0.1 to 10 parts by mass with respect to 100 parts by mass of the (meth)acrylate ester copolymer.

4. The double-sided pressure-sensitive adhesive sheet according to claim 2 or 3, wherein the (meth)acrylate ester monomer has a hydroxyl group and/or alkylene oxide group structure.

5. The double-sided pressure-sensitive adhesive sheet according to any one of claims 1 to 4, wherein the (meth)acrylate ester copolymer contains butyl acrylate and vinyl acetate as copolymerization components.

6. An image display device comprising two facing components for image display device having a configuration in which the double-sided pressure-sensitive adhesive sheet according to any one of claims 1 to 5 is filled between the two components for image display device.

7. The image display device according to claim 6, wherein the component for image display device is a laminate composed of a combination of any one or two or more kinds selected from the group consisting of a touch panel, an image display panel, a surface protective panel and a polarizing film.

8. A method of repeeling a double-sided pressure-sensitive adhesive sheet, wherein a double-sided pressure-sensitive adhesive sheet is peeled from a component for image display device by filling the double-sided pressure-sensitive adhesive sheet according to any one of claims 1 to 5 between two facing components for image display device and then allowing the double-sided pressure-sensitive adhesive sheet to absorb moisture in a humidified environment of a temperature of from 40 to 90°C and from 70 to 100% RH.

9. A method of repeeling a double-sided pressure-sensitive adhesive sheet, wherein a double-sided pressure-sensitive adhesive sheet is peeled from a component for image display device by filling the double-sided pressure-sensitive adhesive sheet according to any one of claims 1 to 5 between two facing components for image display device, curing the double-sided pressure-sensitive adhesive sheet by heat or ultraviolet light, and then allowing the double-sided pressure-sensitive adhesive sheet to absorb moisture in a humidified environment of a temperature of from 40 to 90°C and from 70 to 100% RH.

10. The method of repeeling a double-sided pressure-sensitive adhesive sheet according to claim 8 or 9, wherein the component for image display device is a laminate composed of a combination of any one or two or more kinds selected from the group consisting of a touch panel, an image display panel, a surface protective panel and a polarizing film.
